# FASCICULE DE BREVET EUROPEEN

(11) **EP 0 531 241 B1**
(45) Date de publication et mention de la délivrance du brevet: **22.01.1997**
(21) Numéro de dépôt: 92460025.7
(22) Date de dépôt: 03.09.1992
(51) Int. Cl.: G07C 1/30, G07C 9/00, G07B 15/02, G07F 7/08

(54) **Système électronique à accès contrôlé**
Elektronisches Zugangskontrollsystem
Electronic access control system

(30) Priorité: 03.09.1991 FR 9111031
(43) Date de publication de la demande: 10.03.1993
(73) Titulaire: HELLO S.A., F-75002 Paris (FR)
(72) Inventeur: Benezet, Paul, F-91450 Soisy sur Seine (FR)
(74) Mandataire: Dupuis-Latour, Dominique

(56) Documents cités:
- EP-A- 0 081 921
- EP-A- 0 193 920
- EP-A- 0 355 372
- EP-A- 0 402 821
- DE-A- 3 435 697
- FR-A- 2 615 304
- US-A- 4 634 846
- US-A- 4 709 136

## Description

Le domaine de l'invention est celui des systèmes électroniques tels que par exemple les autoradios, les micro-ordinateurs, les télécopieurs, les téléphones ou encore les systèmes de consommation d'unités de consommation tels que les dispositifs de comptabilisation des durées de stationnement réglementé. Plus précisément, la présente invention concerne un système électronique à accès contrôlé.

D'une manière générale l'invention concerne tout système électronique pouvant faire l'objet d'une appropriation frauduleuse et notamment les systèmes électroniques portables ou portatifs. Ces systèmes électroniques, d'une valeur souvent importante, sont fréquemment laissés à la vue d'éventuels voleurs, par exemple à l'intérieur des automobiles. C'est ainsi le cas des autoradios ou des téléphones de voiture dont la convoitise est souvent à l'origine de bris de glaces ou d'éffractions de portières.

Un système électronique de ce type est constitué par les dispositifs de comptabilisation des durées de stationnement réglementé destiné à être posés derrière le pare-brise d'un véhicule. Un tel dispositif est par exemple décrit dans le FR-A-2 615 304. Ces dispositifs constitués par un boîtier coopérant avec un ticket électronique prépayé, par exemple une carte à mémoire, pour décrémenter des unités de taxe mémorisées sur la carte en fonction de la durée du stationnement représentent également un centre d'intérêt pour d'éventuels voleurs. Ce type de dispositif qui permet de s'affranchir de l'utilisation de bornes fixes individuelles (du type parcmètre de trottoir) ou collectives (du type horodateur) est loué ou vendu par les municipalités et présente une valeur certaine. De par leur fonction impliquant leur exposition à la vue des agents chargés de vérifier notamment que la durée de stationnement est correctement comptabilisée, ils ne peuvent être soustraits, au moins durant leur fonctionnement à la vue de personnes mal intentionnées.

Il pourrait être envisagé de contrôler l'accès de tels systèmes électroniques en subordonnant leur utilisation à la connaissance d' un code confidentiel, à l'image des codes nécessaires pour utiliser des cartes de retrait ou de crédit bancaire. Les nombreuses innovations informatiques dans des domaines aussi variés que le domaine bancaire, la bureautique ou la domotique ont multiplié ce type de codes. Ces codes ayant une nature confidentielle et ne devant généralement pas être écrits sur un document porté par l'utilisateur, il devient très difficile de les mémoriser et surtout d'associer à chaque code la nature de l'opération qu'il est censé autoriser. Par ailleurs, l'oubli d'un code paralyse complètement l'utilisation à laquelle il est destiné et il est généralement nécessaire d'avoir recours à une procédure complexe, notamment dans le domaine bancaire, afin de connaître à nouveau ce code.

Une autre mesure de sécurité connue, décrite par exemple dans les US-A-4 634 846 et EP-A-0 081 921, consiste à subordonner un accès à une zone ou la délivrance d'un bien à la présentation systématique d'une "carte maîtresse" dotée d'un code d'accès. Ainsi, dans le EP-A-0 081 921, un compteur d'eau reçoit deux cartes magnétiques, à savoir une carte chargées d'unités consommables et une carte d'autorisation.

L'objectif de la présente invention est de proposer un système électronique à accès contrôlé non lié nécessairement à la connaissance d'un code ni à la présence d'une carte maîtresse pour permettre son fonctionnement.

Plus précisément, un objectif de l'invention est de fournir un tel système supprimant l'intérêt du vol en rendant ce système inutilisable sans la possession d'objets détenus par les seuls utilisateurs autorisés.

Un autre objectif de l'invention est de fournir un tel système permettant à l'utilisateur de décider s'il doit fonctionner en accès contrôlé ou non.

Un objet particulier de l'invention est de fournir un système de consommation d'unités de consommations, tel qu'un dispositif de comptabilisation des durées de stationnement, à accès contrôlé. L'invention présente en effet un intérêt particulier pour ce type de dispositif en autorisant leur personnalisation. Ainsi les fabricants de ce type d'appareil pourront-ils fournir des boîtiers pouvant être placés ou non, selon la volonté de l'utilisateur, en mode de fonctionnement à accès contrôlé. L'utilisateur se servant de son boîtier de stationnement prépayé dans une ville où les vols sont fréquents pourra personnaliser son dispositif de façon à ce que personne d'autre que lui ne puisse l'utiliser. L'utilisateur habitant une ville calme dans laquelle les vols sont peu nombreux pourra quant à lui choisir de maintenir son dispositif en mode de fonctionnement à accès libre. En cas de recrudescence des vols il aura toujours la possibilité de basculer le système en mode de fonctionnement à accès contrôlé. Pour ce faire, il lui suffira d'acquérir une carte spécifique distincte de la carte portant les unités de consommation (carte de contrôle d'accès). La première introduction de cette carte dans le dispositif fera irréversiblement basculer le dispositif en état d'accès contrôlé tout en personnalisant ledit dispositif puisque la carte à accès contrôlé introduite constitue la clé personnelle obligatoire pour utiliser le dispositif. Le cas échéant, dans des circonstances particulières, on peut prévoir qu'une autorité habilitée puisse ramener le dispositif à l'état à accès libre à l'aide d'une manipulation technique ou d'une "carte-maître" spécifique. Néanmoins, cette disposition constitue une vulnérabilité du système puisque le retour à l'état à accès libre devenant possible, celui-ci pourrait être effectué de manière frauduleuse.

Ces buts sont atteints par un système selon la revendication 1.

L'invention ainsi que les différents avantages qu'elle présente seront plus facilement compris grâce à la description des exemples de réalisation qui va suivre en référence aux dessins dans lesquels :
- la figure 1 représente les différents éléments d'un système de consommation d'unités de consommation à accès contrôlé destiné à comptabiliser des durées de stationnement réglementé;
- la figure 2 représente l'organigramme d'un premier mode de fonctionnement du système selon la figure 1;
- la figure 3 représente l'organigramme d'un deuxième mode de fonctionnement du système selon la figure 1;
- la figure 4 représente l'organigramme d'un troisième mode de fonctionnement du système selon la figure 1;

Le système selon l'invention comprend tout dispositif électronique dont le fonctionnement peut être asservi à une autorisation d'accès destinée à autoriser (ou inhiber) son fonctionnement.

En d'autres termes le dispositif doit vérifier qu'il "a le droit" de fonctionner grâce à une procédure de contrôle d'accès mettant en oeuvre une condition de contrôle d'accès.

Selon l'invention, la mise en oeuvre de cette condition de contrôle d'accès est concrétisée par l'utilisation d'objets portatifs de contrôle d'accès tels que des cartes à mémoire.

On peut distinguer plusieurs cas de mise en oeuvre de ce principe général.

Cas 1 : le dispositif ne peut fonctionner qu'en mode d'accès contrôlé, l'utilisateur devra systématiquement s'identifier pour utiliser le dispositif, par exemple à chaque utilisation ou encore selon toute autre modalité adéquate (toutes les N utilisations, toutes les X heures de fonctionnement, ...). Dans ce cas, l'utilisation du dispositif suppose de posséder une carte à mémoire spécialisée pour le contrôle d'accès et compatible avec des moyens de contrôle d'accès situés dans le dispositif. Ces moyens de contrôle d'accès sont par exemple préprogrammés lors de la fabrication, ou de la remise du dispositif à l'utilisateur. Ils peuvent être aussi programmés, selon une variante, par la première introduction d'une carte de contrôle d'accès par l'utilisateur lui-même. Dans toutes les variantes, l'objectif est d'apparier le dispositif avec une carte donnée de contrôle d'accès, de façon à interdire à quiconque ne possédant pas cette carte de contrôle d'accès d'utiliser le dispositif en question.

Cas 2 : le dispositif comporte deux états :
- un état à accès libre,
- un état à accès contrôlé, dans lequel le fonctionnement du dispositif est asservi à une procédure de contrôle d'accès du type décrit au cas 1.

On peut prévoir que le dispositif est au départ en accès libre, et que le basculement de l'état d'accès libre vers l'état d'accès contrôlé est effectué irréversiblement dès lors que l'on a introduit une carte de contrôle d'accès. Dans des variantes, d'autres modalités de passage d'un état à l'autre peuvent être conçues par l'homme du métier.

Lorsque le dispositif se trouve à l'état d'accès contrôlé, l'utilisation de la carte de contrôle d'accès peut s'effectuer selon l'une des façons suivantes:
- introduction systématique obligatoire de la carte de contrôle d'accès avant chaque utilisation du système ;
- introduction de la carte de contrôle d'accès seulement à certaines occasions, par exemple toutes les N introductions d'une carte d'unités consommables, ou toutes les X périodes.

L'exemple de réalisation qui suit se rapporte plus particulièrement à la mise en oeuvre de l'invention dans un dispositif de comptabilisation du temps à carte à mémoire du type parcmètre portable.

Bien entendu la description détaillée de cet exemple de réalisation ne vise pas à restreindre la portée de l'invention qui peut s'appliquer, dans ses principes généraux, à tout dispositif auquel on souhaite conférer une fonction latente de contrôle d'accès.

On entend par dispositif de comptabilisation de temps un appareil constitué par exemple par un boîtier, préférentiellement portable, destiné à être posé derrière le pare-brise d'un véhicule et coopérant avec un ticket électronique prépayé, par exemple une carte à mémoire, pour décrémenter des unités de taxe mémorisées sur la carte, en fonction de la durée du stationnement. Ce type de dispositif permet de s'affranchir de l'utilisation de bornes fixes individuelles (du type parcmètre de trottoir) ou collectives (du type horodateur). L'utilisateur acquitte automatiquement des taxes de stationnement par introduction d'une carte à mémoire prépayée dans son boîtier. Les boîtiers sont généralement vendus, prêtés ou loués par des collectivités locales ou leurs mandataires, qui commercialisent des unités de stationnement, sous forme de cartes d'un type différent pour chaque collectivité locale. La régularité du stationnement peut être vérifiée grâce à un afficheur sur lequel apparaissent les diverses informations nécessaires au personnel de contrôle, par exemple le numéro de zone de stationnement sélectionné par l'utilisateur, un code identifiant notamment le type de carte introduite par l'utilisateur dans le boîtier et représentatif de la ville de stationnement, et le cas échéant une information indicative d'une situation d'infraction, et le nombre d'unités de taxes encore disponibles sur la carte. Les mémoires des cartes peuvent être réinscriptibles ou inscrites irréversiblement. Le boîtier du dispositif comporte des moyens de gestion des changements de cartes insérées dans le boîtier. Le boîtier comprend également une horloge interne permettant de donner l'heure courante (heure + minutes), la date courante et de décompter régulièrement des unités de taxe et de tenir compte des périodes de temps de la journée où le stationnement n'est pas payant.

La régularité du stationnement est contrôlée par un agent qui vérifie notamment, grâce aux données affichées sur le boîtier, que le dispositif a bien été mis en marche, que la carte introduite correspond bien à la ville de stationnement, que l'électronique du boîtier n'a pas été altérée ou contrefaite, que toutes les unités de taxes pour le paiement du stationnement n'ont pas déjà été consommées, et que la durée maximale de stationnement autorisé n'a pas été dépassée. Si le contrôleur constate que l'un de ces critères n'est pas rempli, il est en droit de verbaliser le propriétaire du véhicule en infraction.

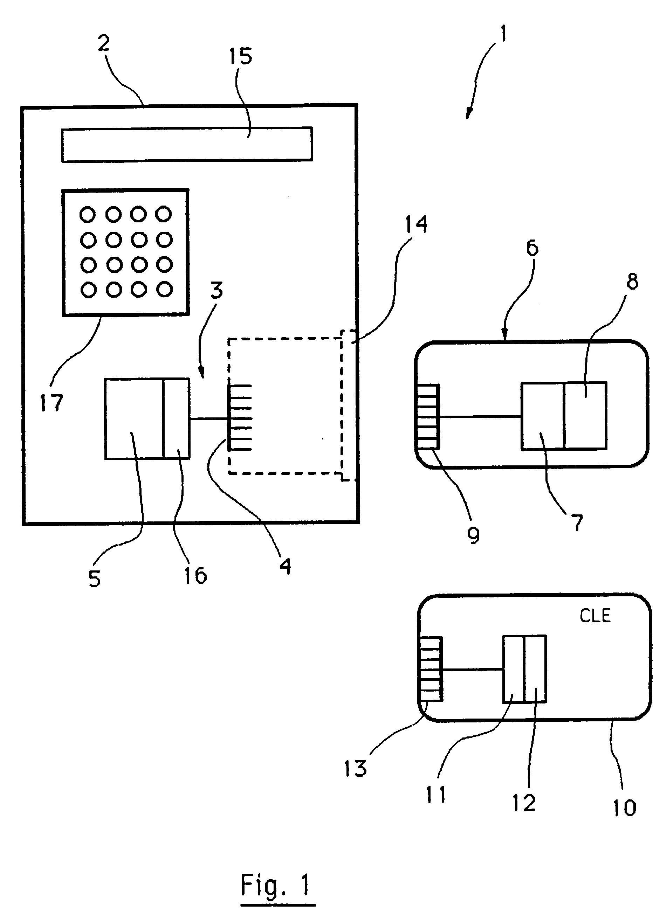

Selon la figure 1 un système 1 de consommation d'unités de consommation utilisé pour la comptabilisation des durées de stationnement comprend :
- un boîtier 2 incluant un module de transfert 3 présentant des moyens de couplage 4 reliés à un circuit électronique interne 5 communiquant notamment avec des moyens d'autorisation et/ou d'inhibition 16 du fonctionnement du boîtier 2, et destinés à s'accoupler temporairement avec les moyens de couplage d'objets portatifs tels qu'un carte à mémoire. A cet effet, le boîtier 2 présente une fente 14 permettant l'introduction d'une carte à mémoire de façon à autoriser le contact des moyens de couplage d'une telle carte avec les moyens de couplage 4 dudit boîtier 2. Ce boîtier est par ailleurs muni de moyens d'information par exemple constitués par un afficheur à cristaux liquides 15 ou par un diffuseur de messages sonores. Ces moyens d'information servent notamment à renseigner l'usager en cours de procédure de contrôle d'accès. Le boîtier 2 présente également un clavier pouvant ne comporter qu'un nombre réduit de touches permettant notamment la passation de commandes au circuit électronique du module de transfert 3 mais pouvant également être utilisé pour entrer par exemple l'heure de début de stationnement, la zone de stationnement ou pour effectuer la mise à l'heure etc...
- un premier objet portatif constitué par une carte à mémoire 6 munie de moyens de commande et d'adressage 7, d'une mémoire électronique 8 reliés à des moyens de couplage 9 aptes à s'accoupler temporairement avec les moyens de couplage 4 du module de transfert 3 du boîtier 2, ladite mémoire électronique 8 contenant des unités consommables de durée de stationnement prépayées lors de l'achat de ladite carte à mémoire 6.
- un second objet portatif de contrôle d'accès constitué par une carte à mémoire 10 ci-après désignée sous le terme de clé, munie également de moyens de commande et d'adressage 11 et d'une mémoire électronique 12 reliés à des moyens de couplage 13 aptes à s'accoupler temporairement avec les moyens de couplage 4 du module de transfert 3 du boîtier 2. Ladite mémoire électronique 12 contient un code d'accès de fonctionnement du boîtier. Ce code d'accès est constitué d'une combinaison de caractères alphanumériques. En utilisant un code à 5 caractères, il est ainsi possible de disposer de mille milliards de combinaisons possibles.

Selon l'invention, le système 1 peut être configuré de plusieurs façons permettant de le mettre en oeuvre selon de multiples procédés d'utilisation.

Ainsi, le système 1 peut être configuré de façon à ne pouvoir fonctionner qu'en mode d'accès contrôlé de façon à interdire à quiconque ne possédant pas une carte de contrôle d'accès d'utiliser le dispositif en question. Dans ce cas, l'utilisateur devra systématiquement s'identifier pour utiliser le dispositif, par exemple à chaque utilisation ou encore selon toute autre modalité adéquate (toutes les N utilisations, toutes les X heures de fonctionnement, ...). Dans ce cas, l'utilisation du dispositif est subordonnée à la possession par l'utilisateur de la carte à mémoire de contrôle d'accès 10 (la clé) permettant le contrôle d'accès et coopérant avec les moyens d'autorisation et/ou d'inhibition 16 du fonctionnement du boîtier 2. Ces moyens d'autorisation et/ou d'inhibition peuvent par exemple être préprogrammés lors de la fabrication, ou de la remise du dispositif à l'utilisateur. Ils peuvent être aussi programmés, selon une variante, par la première introduction d'une carte de contrôle d'accès par l'utilisateur lui-même.

Le système 1 selon la figure 1 peut également être configuré de façon à ce que le boîtier 2 puisse présenter deux états de fonctionnement :
- un état à accès libre, dans lequel il est autorisé à fonctionner dès lors qu'on lui a accouplé la carte à mémoire 8 possédant des unités consommables disponibles,
- un état à accès contrôlé, dans lequel le fonctionnement du dispositif est asservi à une procédure de contrôle d'accès.

On peut ainsi prévoir que le dispositif est au départ en accès libre, et que le basculement de l'état d'accès libre vers l'état d'accès contrôlé est effectué irréversiblement dès lors que l'on a introduit la carte de contrôle d'accès 10. Dans des variantes, d'autres modalités de passage d'un état à l'autre peuvent être conçues par l'homme du métier.

Dans une variante de l'invention, le dispositif peut néanmoins être replacé en position d'accès libre par des moyens spécifiques (non accessibles par l'utilisateur) par exemple lorsque l'utilisateur a perdu sa carte : il peut alors retourner l'appareil au constructeur ou à un de ses représentants agréés pour "déverrouiller" son dispositif. Une fois déverrouillé, le dispositif peut être à nouveau basculé de l'état d'accès libre vers l'état d'accès contrôlé, de façon irréversible, par introduction d'une carte de contrôle d'accès 10.

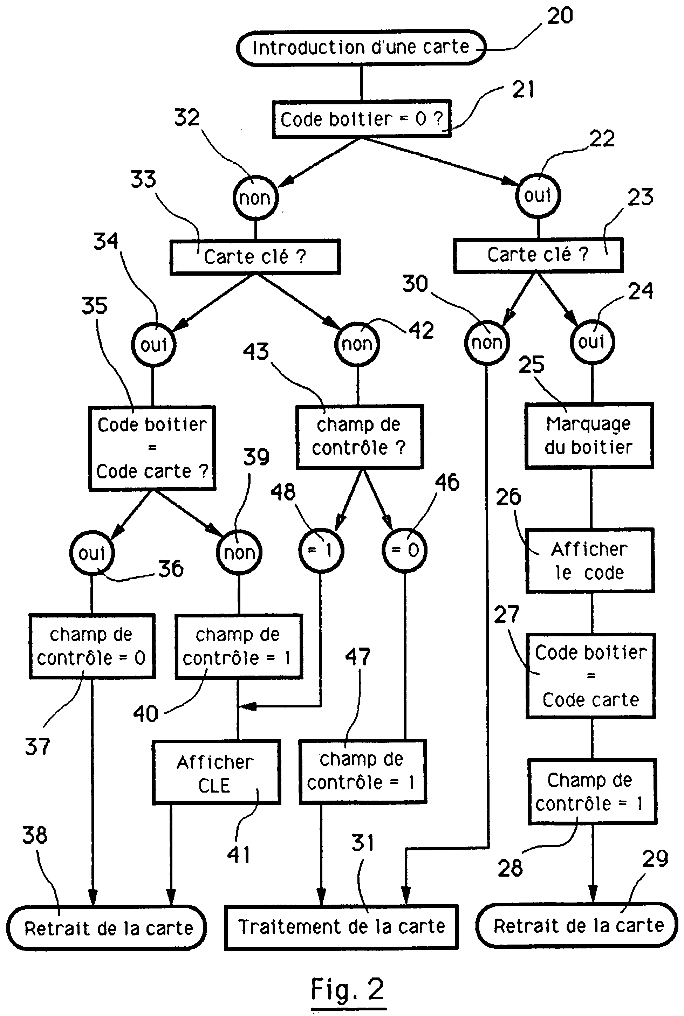

Les figures 2, 3 et 4 représentent différents organigrammes de fonctionnement du système selon la figure 1 traduisant autant de procédés d'utilisation de celui-ci.

Selon la figure 2, le boîtier 2 du système 1 présente deux états de fonctionnement :
- un état d'accès libre et,
- un état d'accès contrôlé.

Le basculement de l'état d'accès libre vers l'état d'accès contrôlé est effectué irréversiblement lors de la première introduction de la clé 10. Lorsque le boîtier 2 est en position de fonctionnement à accès contrôlé, l'utilisateur doit avant toute introduction de la carte à unités 6, introduire la carte clé 10. Avant cette première introduction, le boîtier peut fonctionner dès lors qu'on lui a accouplé la carte à mémoire 8 portant des unités consommables disponibles.

Le fonctionnement du système est alors le suivant.

Lors de l'introduction (20) d'une carte à mémoire dans le boîtier 2, le circuit électronique 5 du module de transfert 3 teste la valeur contenue dans un champ code desdits moyens d'activation et/ou d'inhibition 16 afin de déterminer si celle-ci est égale ou non à 0 (21).

Si cette valeur est égale à 0 (22) le boîtier est donc à accès libre, il peut fonctionner sans carte clé. La carte qui a été introduite est alors testée de façon à déterminer s'il s'agit d'une carte clé 10, ou d'une carte à unités consommables 6 (23).

S'il s'agit d'une carte clé (24), le boîtier 2 est basculé en état de fonctionnement à accès contrôlé (25). Le code inscrit dans la mémoire 12 de la carte clé 10 est lu et affiché (26) et la valeur d'un champ de contrôle de la zone mémoire des moyens d'activation et/ou d'inhibition 16 du module de transfert 3 prend la valeur du code de la carte clé 10 (27). Le champ de contrôle également situé dans la zone mémoire des moyens d'activation et/ou d'inhibition 16 du module de transfert 3 prend alors la valeur 1 de façon à signaler le passage du boîtier en état de fonctionnement contrôlé (28). La carte 10 est ensuite éjectée ou retirée du boîtier 2 (29).

Si la carte introduite n'est pas une carte clé (30), il s'agit donc d'une carte à unités consommables 6 et le boîtier 2 fonctionnant en accès libre, la carte 6 peut être traitée de façon à décrémenter les unités consommables qui sont inscrites dans sa mémoire 12 (31).

Si la valeur contenue dans le champ code de la zone mémoire des moyens d'activation et/ou d'inhibition 16 du module de transfert 3 est différente de 0 (32), le boîtier fonctionne donc uniquement en position de fonctionnement à accès contrôlé. La carte introduite dans le boîtier est donc testée par le circuit électronique 5 de façon à déterminer s'il s'agit d'une carte à unités consommables ou d'une carte clé (33). S'il s'agit d'une carte clé (34), la valeur du code contenu dans la zone mémoire des moyens d'activation et/ou d'inhibition 16 du module de transfert 3 est comparée au code de la carte clé (35). Si les deux codes sont égaux (36), le valeur du champ de contrôle est amenée à 0 (37) de façon à indiquer au circuit électronique 5 que la code testé est le bon. La carte clé est ensuite éjectée ou retirée. Si ce n'est pas le cas (39), la valeur du champ de contrôle est fixée à 1 (40), le message "CLE" est affiché (41) et la carte est éjectée ou retirée (38).

Si la carte introduite n'est pas une carte clé mais une carte à unités (42), la valeur du champ de contrôle est testée (45) de façon à déterminer s'il est égal à 0 ou à 1, c'est-à-dire si la carte clé idoine a bien été introduite préalablement à la carte à unités 6. Si le champ de contrôle est égal à 0 (46), la carte clé a nécessairement été introduite préalablement à la carte à unité et le fonctionnement du dispositif est autorisé. La valeur du champ de contrôle est fixée de nouveau à 1 (47) et la carte est traitée. Si la valeur du champ de contrôle est égale à 1 (48), la carte clé portant le code d'accès n'a pas été introduite et le message "CLE" est affiché.

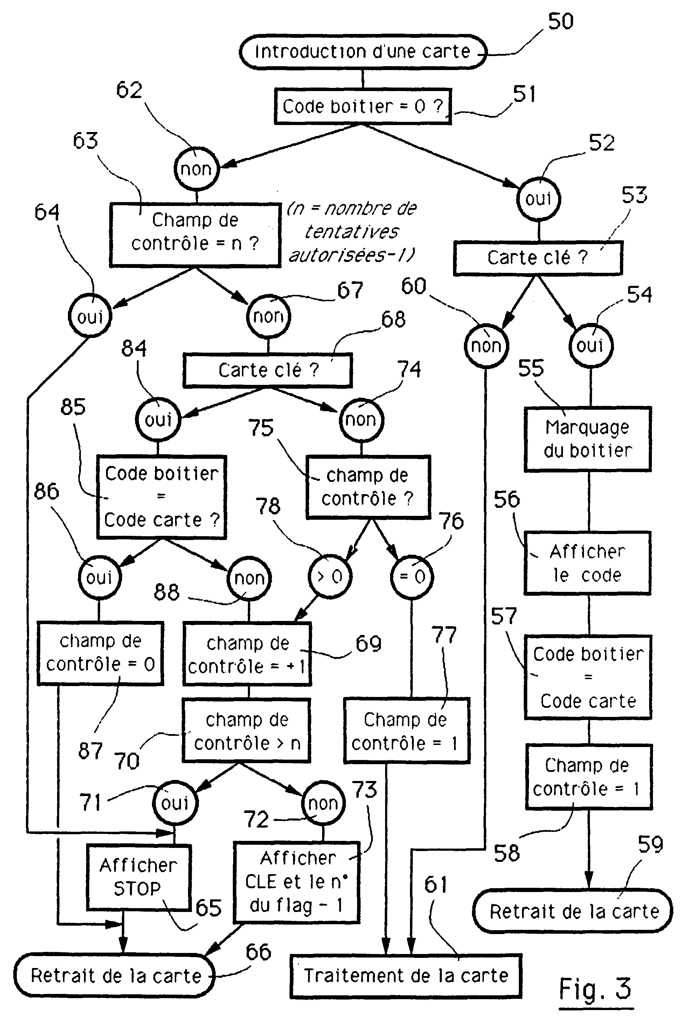

Selon la figure 3, le fonctionnement du boîtier 2 du dispositif 1 présente un état de fonctionnement libre et un état de fonctionnement à accès contrôlé.

Le dispositif est conçu de façon à autoriser un nombre défini de tentatives d'introduction d'une carte clé, lorsque le boîtier est en état de fonctionnement à accès contrôlé.

Le basculement en état de fonctionnement à accès contrôlé est provoqué lors de la première introduction de la clé 10.

Le fonctionnement du système 1 est alors le suivant.

Lors de l'introduction (50) d'une carte à mémoire dans le boîtier 2, le circuit électronique 5 du module de transfert 3 teste la valeur contenue dans le champ code desdits moyens d'activation et/ou d'inhibition 16 afin de déterminer si celle-ci est égale ou non à 0 (51).

Si cette valeur est égale à 0 (52) le boîtier est donc à accès libre, il peut fonctionner sans carte clé. La carte qui a été introduite est alors testée de façon à déterminer s'il s'agit d'une carte clé 10, ou d'une carte à unités consommables 6 (53).

S'il s'agit d'une carte clé (54), le boîtier 2 est basculé en état de fonctionnement à accès contrôlé (55). Le code inscrit dans la mémoire 12 de la carte clé 10 est lu et affiché (56) et la valeur du champ de contrôle de la zone mémoire des moyens d'activation et/ou d'inhibition 16 du module de transfert 3 prend la valeur du code de la carte clé (57). Le champ de contrôle également situé dans la zone mémoire des moyens d'activation et/ou d'inhibition 16 du module de transfert 3 prend alors la valeur 1 de façon à signaler le passage du boîtier en état de fonctionnement contrôlé (58). La carte 10 est ensuite éjectée ou retirée du boîtier 2 (59).

Si la carte introduite n'est pas une carte clé (60), il s'agit donc d'une carte à unités consommables 6 et le boîtier 2 fonctionnant en accès libre, la carte 6 peut être traitée de façon à décrémenter les unités consommables qui sont inscrites dans sa mémoire 12 (61).

Si la valeur contenue dans le champ code de la zone mémoire des moyens d'activation et/ou d'inhibition 16 du module de transfert 3 est différente de 0 (62), le boîtier fonctionne donc uniquement en position de fonctionnement à accès contrôlé. La valeur du champ de contrôle est testée (63) de façon à informer le circuit 5 s'il s'agit d'une première, d'une deuxième ou d'un énième tentative d'introduction de la carte. Si le nombre de tentatives est supérieur au nombre limite de tentatives autorisé (64), le message "STOP" est affiché (65) et la carte éjectée ou retirée (66). Si le nombre de tentatives est inférieur au nombre limite de tentatives autorisé (67), la carte introduite dans le boîtier est donc testée (68) par le circuit électronique 5 de façon à déterminer s'il s'agit d'une carte à unités consommables ou d'une carte clé.S'il s'agit d'une carte clé (84), la valeur du code contenu dans la zone mémoire des moyens d'activation et/ou d'inhibition 16 du module de transfert 3 est comparée au code de la carte clé (85). Si les deux codes sont égaux (86), le valeur du champ de contrôle est amenée à 0 (87) de façon à indiquer au circuit électronique 5 que le code testé est le bon. La carte clé est ensuite éjectée ou retirée (66). Si ce n'est pas le cas (88), la valeur du champ de contrôle est incrémentée d'une unité (40) puis testée afin de déterminer si cette tentative d'introduction de la carte est interdite (70). Si oui (71), le message "STOP" est affiché (65) et la carte éjectée ou retirée. Le fonctionnement du boîtier est alors inhibé. Si la tentative est autorisée (72), le message "CLE TENTATIVE N° X'', X correspondant au numéro du champ de contrôle diminué de 1, est affiché (73) et la carte est éjectée ou retirée (66).

Si la carte introduite n'est pas une carte clé mais une carte à unités (74), la valeur du champ de contrôle est testée (75) de façon à déterminer s'il est égal ou différent de 0, c'est-à-dire si la carte clé idoine a bien été introduite préalablement à la carte à unités 6. Si le champ de contrôle est égal à 0 (76), la carte clé a nécessairement été introduite préalablement à la carte à unités et le fonctionnement du dispositif est autorisé. La valeur du champ de contrôle est fixée de nouveau à 1 (77) et la carte est traitée (61). Si la valeur du champ de contrôle est différente de 0 (78), cette valeur est incrémentée d'une unité (69) puis testée pour savoir si elle est supérieure au nombre de tentatives autorisé (70). Si oui (71), le message "STOP" est affiché (65) et la carte éjectée ou retirée. Le fonctionnement du boîtier est alors inhibé. Si la tentative est autorisée (72), le message "CLE TENTATIVE N° X", X correspondant au numéro du champ de contrôle diminué de 1, est affiché (73) et la carte est éjectée ou retirée.

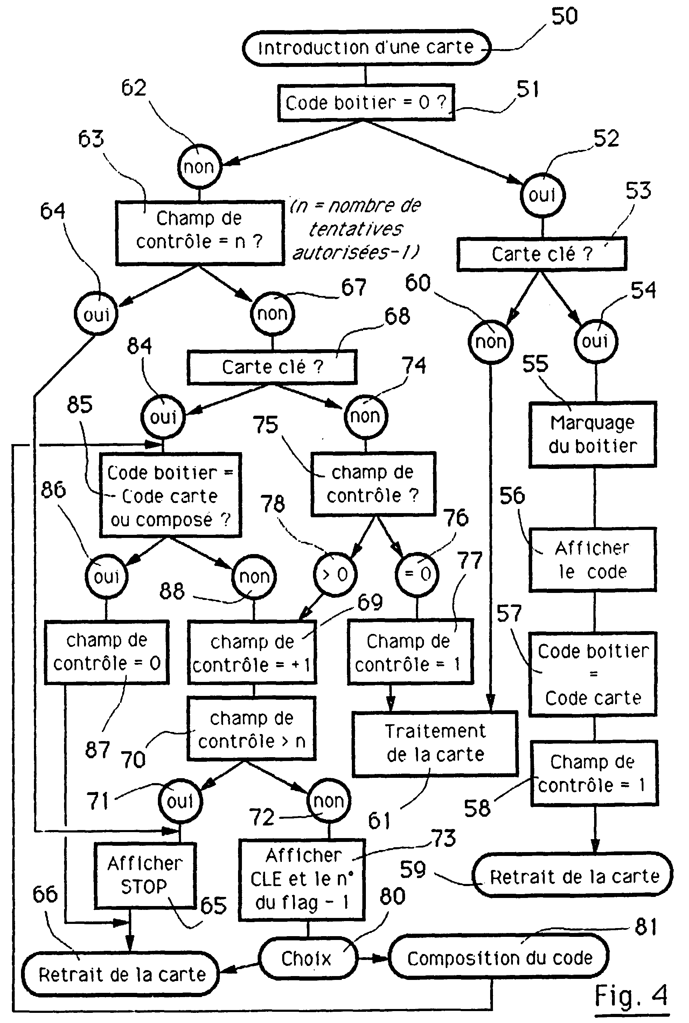

Selon la figure 4 le fonctionnement du système 1 est identique au fonctionnement dont l'organigramme est représenté à la figure 2. Lors de la première introduction de la carte clé 6, le code d'accès est affiché (56) et l'utilisateur dispose ensuite d'un choix (80) à partir de la deuxième tentative d'introduction de la carte clé quant au mode d'accès au fonctionnement du boîtier 2:
- soit il introduit la carte clé avant l'utilisation de la carte à unités,
- soit il entre le code d'accès(81) qui lui a été révélé lors de la première introduction, grâce au clavier 17 du boîtier 2.

Dans l'hypothèse ou le boîtier 2 ne possède que deux boutons et non un clavier 17, le code peut être entré par l'utilisateur selon la méthode suivante :
1) appui simultané sur les deux boutons ;
2) affichage d'un tiret sur la première position de l'écran 15 ;
3) sélection du premier chiffre du code à l'aide d'un des boutons ;
4) validation du premier chiffre par appui simultané sur les deux boutons;
5) affichage d'un tiret sur la seconde position de l'écran 15 ;
6) sélection du second chiffre à l'aide de l'un des boutons ;
7) validation du second chiffre par appui simultané sur les deux boutons;
8) actions identiques 5 à 7 pour les troisième et quatrième chiffres du code.

Bien sûr d'autres procédés d'utilisation d'un tel système de consommation d'unités de consommation selon l'invention pourront être envisagés par l'homme du métier sans sortir du cadre de la présente invention tel que défini par les revendications.

## Revendications

1. Un système électronique du type comprenant :
- une pluralité d'objets portatifs (6, 10) comprenant chacun une mémoire électronique de stockage (8,12), et
- au moins un boîtier (2) asservi à la consommation d'unités consommables, ce boîtier incluant un module de transfert (3) apte à être accouplé temporairement à un objet portatif de façon à établir une liaison de communication avec la mémoire de cet objet portatif et comportant des moyens (16) d'autorisation/inhibition du fonctionnement du boîtier,
caractérisé en ce que :
- le système comprend deux ensembles distincts d'objets portatifs spécialisés susceptibles d'être accouplés indifféremment au boîtier, à savoir : i) un ensemble d'objets portatifs de contrôle d'accès (10) et ii) un ensemble d'objets portatifs de stockage des unités consommables (6),
- les moyens d'autorisation/inhibition sont des moyens commandés par les objets portatifs de contrôle d'accès, et
- le boîtier est susceptible de fonctionner selon deux états, un état à accès libre dans lequel son fonctionnement s'effectue sans avoir à recourir à un objet portatif de contrôle d'accès, et un état à accès contrôlé dans lequel son fonctionnement est conditionné à l'accouplement occasionnel d'un objet portatif de contrôle d'accès.

2. Le système de la revendication 1, dans lequel l'accouplement occasionnel est un accouplement opéré chaque fois qu'un nombre prédéterminé (N) d'utilisations du boîtier est atteint depuis le précédent accouplement de l'objet portatif de contrôle d'accès.

3. Le système de la revendication 1, dans lequel l'accouplement occasionnel est un accouplement opéré chaque fois qu'un nombre prédéterminé (X) de périodes temporelles données est atteint depuis le précédent accouplement de l'objet portatif de contrôle d'accès.

4. Le système de la revendication 1, dans lequel l'état à accès contrôlé est un état latent, la transition de l'état à accès libre à l'état à accès contrôlé étant réalisée au premier accouplement d'un objet portatif de contrôle d'accès avec le boîtier.

5. Le système de la revendication 4, dans lequel :
- la mémoire de l'objet portatif de contrôle d'accès contient un code d'accès,
- le boîtier comprend une mémoire avec un champ code destiné à recevoir un code d'accès, ce champ étant chargé par le code d'accès du premier objet portatif de contrôle d'accès accouplé au boîtier,
- les moyens d'autorisation/inhibition du boîtier comprennent des moyens comparateurs vérifiant la conformité d'un code fourni par l'utilisateur avec le code d'accès mémorisé dans le champ code du boîtier.

6. Le système de la revendication 5, dans lequel le code fourni par l'utilisateur est le code contenu dans la mémoire d'un objet portatif de contrôle d'accès accouplé au boîtier.

7. Le système de la revendication 5, dans lequel le boîtier comporte des moyens de composition de code (17) et le code fourni par l'utilisateur est un code introduit par ces moyens de composition de code.

8. Le système de la revendication 5, dans lequel la mémoire du boîtier comprend également un champ de contrôle dont la valeur est mise à jour par les moyens comparateurs, le fonctionnement des moyens d'autorisation/inhibition étant conditionné par la valeur de ce champ de contrôle.

9. Le système de la revendication 8, dans lequel le champ de contrôle est un compteur des tentatives d'introduction d'un code non conforme, et les moyens d'autorisation/inhibition interdisent le fonctionnement du boîtier lorsque ce compteur dépasse un seuil prédéterminé.

10. Un boîtier (2) asservi à la consommation d'unités consommables et comportant un module de transfert (3) destiné à être accouplé temporairement à un objet portatif de façon à établir une liaison de communication avec une mémoire de cet objet portatif, ainsi que des moyens (16) d'autorisation/inhibition du fonctionnement du boîtier, boîtier caractérisé en ce que les moyens d'autorisation/inhibition sont des moyens commandés par des objets portatifs de contrôle d'accès (10), eux-mêmes distincts d'objets portatifs de stockage des unités consommables (6), et en ce qu'il est susceptible de fonctionner selon deux états, un état à accès libre dans lequel son fonctionnement s'effectue sans avoir à recourir à un objet portatif de contrôle d'accès, et un état à accès contrôlé dans lequel son fonctionnement est conditionné à l'accouplement occasionnel d'un objet portatif de contrôle d'accès.

## Patentansprüche

1. Elektronisches System von dem Typ, der aufweist:
- eine Vielzahl von tragbaren Gegenständen (6, 10), die jeweils einen elektronischen Speicher (8, 12) aufweisen, und
- zumindest ein Gehäuse (2), das durch den Verbrauch von verbrauchbaren Einheiten gesteuert wird, wobei das Gehäuse ein Übertragungsmodul (3) aufweist, das dazu geeignet ist, zeitweise mit einem tragbaren Gegenstand gekoppelt zu werden, um eine Kommunikationsverbindung mit dem Speicher dieses tragbaren Gegenstandes aufzubauen, und Einrichtungen (16) zur Autorisierung/Sperrung der Funktion des Gehäuses aufweist,
dadurch gekennzeichnet, daß
- das System zwei unterschiedliche Einheiten von tragbaren spezialisierten Gegenständen aufweist, die dazu geeignet sind, neutral mit dem Gehäuse gekoppelt zu werden, d.h.: i) eine Einheit von tragbaren Gegenständen zur Zugangssteuerung (10) und ii) eine Einheit von tragbaren Gegenständen zur Speicherung von verbrauchbaren Einheiten (6),
- die Einrichtungen zur Autorisierung/Sperrung Einrichtungen sind, die durch die tragbaren Gegenstände zur Zugangssteuerung gesteuert werden, und
- das Gehäuse dazu geeignet ist, gemäß zwei Zuständen zu funktionieren, einem Zustand mit freien Zugang, bei dem seine Funktion ohne auf einen tragbaren Gegenstand zur Zugangssteuerung zurückgreifen zu müssen, geschieht, und einem Zustand mit gesteuertem Zugriff, bei dem seine Funktion durch das gelegentliche Ankoppeln eines tragbaren Gegenstandes zur Zugangssteuerung bestimmt ist.

2. System gemäß Anspruch 1, bei dem die gelegentliche Ankopplung eine Ankopplung ist, die jedesmal ausgeführt wird, wenn eine vorbestimmte Anzahl (N) von Benutzungen des Gehäuses seit der vorangehenden Ankopplung des tragbaren Gegenstandes zur Zugangssteuerung erreicht ist.

3. System gemäß Anspruch 1, bei dem die gelegentliche Ankopplung eine Ankopplung ist, die jedesmal ausgeführt wird, wenn eine vorbestimmte Anzahl (X) von vorgegebenen zeitweisen Perioden seit der vorangehenden Ankopplung des tragbaren Gegenstandes zur Zugangssteuerung erreicht ist.

4. System gemäß Anspruch 1, bei dem der Zustand mit gescheuertem Zugang ein latenter Zustand ist und wobei der Übergang vom Zustand mit freiem Zugang und vom Zustand mit gesteuertem Zugang bei der ersten Ankopplung eines tragbaren Gegenstandes zur Zugangssteuerung an das Gehäuse ausgeführt wird.

5. System gemäß Anspruch 4, bei dem:
- der Speicher des tragbaren Gegenstandes zur Zugangssteuerung einen Zugangscode enthält,
- das Gehäuse ein Speicher mit einem Codefeld aufweist, das dazu bestimmt ist, einen Zugangscode zu empfangen, wobei dieses Feld durch den Zugangscode des ersten tragbaren Gegenstandes mit Zugangssteuerung, der an das Gehäuse ankoppelt wird, geladen wird,
- die Einrichtungen zur Autorisierung/Sperrung des Gehäuses Vergleichseinrichtungen aufweisen, die die Konformität eines Codes verifizieren, der durch den Benutzer mit dem Zugangscode geliefert wird, der in dem Codefeld des Gehäuses gespeichert ist.

6. System gemäß Anspruch 5, bei dem der durch den Benutzer gelieferte Code der Code ist. der in dem Speicher eines tragbaren Gegenstandes mit Zugangssteuerung enthalten ist, der an das Gehäuse angekoppelt ist.

7. System gemäß Anspruch 5. bei dem das Gehäuse Einrichtungen zur Zusammenstellung eines Codes (17) aufweist und wobei der Code, der von dem Benutzer geliefert wird, ein Code ist, der durch diese Einrichtungen zur Zusammenstellung eines Codes eingegeben worden ist.

8. System gemäß Anspruch 5, bei dem der Speicher des Gehäuses gleichfalls ein Steuerfeld aufweist, dessen Wert durch die Vergleichseinrichtungen aktualisiert wird, und wobei die Funktion der Einrichtungen zur Autorisierung/Sperrung durch den Wert dieses Steuerfeldes bestimmt ist.

9. System gemäß Anspruch 8, bei dem das Steuerfeld ein Zähler für die Eingabeversuche eines nicht-konformen Codes ist und wobei die Einrichtungen zur Autorisierung/Sperrung die Funktion des Gehäuses untersagen, wenn dieser Zähler eine vorbestimmte Schwelle überschreitet.

10. Gehäuse (2), das durch den Verbrauch von verbrauchbaren Einheiten gesteuert ist, und ein Übertragungsmodul (3) aufweist, das dazu bestimmt ist, zeitweise an einen tragbaren Gegenstand angekoppelt zu werden, um eine Kommunikationsverbindung mit einem Speicher dieses tragbaren Gehäuses aufzubauen, sowie mit Einrichtungen (16) zur Autorisierung/Sperrung der Funktion des Gehäuses, wobei das Gehäuses dadurch gekennzeichnet ist, daß die Einrichtungen zur Autorisierung/Sperrung Einrichtungen sind, die durch tragbare Gegenstände zur Zugangssteuerung (10) gesteuert sind, die selbst unterschiedlich von tragbaren Gegenständen zur Speicherung von verbrauchbaren Einheiten (6) sind, und dadurch, daß es dazu geeignet ist, gemäß zwei Zuständen zu funktionieren, einem Zustand mit freiem Zugang, in dem seine Funktion ohne auf einen tragbaren Gegenstand mit Zugangssteuerung zurückgreifen zu müssen, geschieht, und einem Zustand mit gesteuertem Zugang, in dem seine Funktion durch das gelegentliche Ankoppeln eines tragbaren Gegenstandes zur Zugangssteuerung bestimmt ist.

## Claims

1. An electronic system of the type comprising :
- a plurality of portable objects (6, 10) each including an electronic storage memory (8, 12) and
- at least a box (2) mastered by the consumption of consumable units, said box including a transfer module (3) adapted to be temporarily coupled to a portable object so as to set up a communication link with said memory of said portable object, and including means (16) for authorization/inhibition of the operation of the box,
characterized in that :
- the system includes two separate sets of specialized portable objects equally able to be connected to the box, namely : (i) a set of access control portable objects (10) and (ii) a set of consumable units storage portable objects (6),
- the authorization/inhibition means are means controlled by said access control portable objects, and
- the box may operate under two states, namely a free access state wherein its operation proceeds without the need of an access control portable object, and a control access state wherein its operation depends on the occasional coupling of an access control portable object.

2. The system according to claim 1, wherein the occasional coupling is a coupling made whenever a predetermined number (N) of uses of the box has been reached since the previous coupling of the access control portable object.

3. The system according to claim 1, wherein the occasional coupling is a coupling made whenever a predetermined number (X) of given time periods has been reached since the previous coupling of the access control portable object.

4. The system according to claim 1, wherein the control access state is a latent state, the transition from said free access state to said control access state being done upon the first coupling of an access control portable object with the box.

5. The system according to claim 4, wherein :
- the memory of the access control portable object includes an access code,
- the box includes a memory with a code field for receiving an access code, said field been loaded with the access code of the first access control portable object coupled to the box,
- the authorization/inhibition means of the box include the comparator means for checking that a code provided by the user complies with the access code stored in the code field of the box.

6. The system according to claim 5, wherein the code provided by the user is the code contained in the memory of an access control portable object coupled to the box.

7. The system according to claim 5, wherein the box includes code keying means (17) and the code provided by the user is a code entered by said code keying means.

8. The system according to claim 5, wherein the memory of the box further includes a control field the value of which is updated by the comparator means, the operation of the authorization/inhibition means depending on the value of said control field.

9. The system according to claim 8, wherein the control field is a counter of the attempts to introduce a non-compliant code, and the authorization/inhibition means prohibit the operation of the box when said counter exceeds a given threshold.

10. A box (2) mastered by the consumption of consumable units and including a transfer module (3) adapted to be temporarily coupled to a portable object so as to set up a communication link with a memory of said portable object, as well as means (16) for authorization/inhibition of the operation of the box,
said box being characterized in that the authorization/inhibition means are means controlled by access control portable objects (10), which themselves are separate from consumable unit storage portable objects (6) and in that it may operate under two states, a free access state wherein its operation proceeds without the need of an access control portable object, and a control access state wherein its operation depends on the occasional coupling of an access control portable object.
